# EUROPÄISCHE PATENTANMELDUNG

(11) **EP 4 635 303 A1**
(43) Veröffentlichungstag der Anmeldung: **22.10.2025**
(21) Anmeldenummer: 24171224.9
(22) Anmeldetag: 19.04.2024
(51) Int. Cl.: A23P 30/20, A23J 3/26, B29C 48/30, B29C 48/89

(54) **KÜHLDÜSE FÜR EINEN EXTRUDER**

(71) Anmelder: Bühler AG, 9240 Uzwil (CH)
(72) Erfinder: CANTIENI, Nick, 9500 Wil (CH); MEILE, David Elmar, 9500 Wil (CH); KLEIN, Frieder Sorbas, 8274 Tägerwilen (CH)
(74) Vertreter: Hepp Wenger Ryffel AG

(57) **Zusammenfassung**

Die vorliegende Erfindung betrifft eine Nahrungs- bzw. Futtermittelextruderkühldüse (1) mit einem ringausschnittförmigen Extrudatströmungskanal (6) mit einer Innenwand (14) und einer Aussenwand (9), wobei die Aussenwand (9) des Extrudatströmungskanals (6) mindestens aus einem ersten Segment (10) und einem zweiten Segment (11) ausgebildet ist, und die Innenwand (14) an einer ersten Position mit einer sich über die gesamte Länge des Kühlwerkzeugs (1) erstreckenden ersten Stützstruktur (13) und an mindestens einer zweiten Position mit einer zweiten Stützstruktur (13) verbunden ist. Die vorliegende Erfindung betrifft weiterhin einen Nahrungs- beziehungsweise Futtermittelextruder, umfassend eine derartige Kühldüse, sowie ein Verfahren zur Herstellung eines nasstexturierten Produkts unter Verwendung einer derartigen Kühldüse.

## Beschreibung

Die vorliegende Erfindung betrifft eine Kühldüse für einen Extruder.

Bestimmte Nahrungsmittel wie alternative Fleischprodukte werden häufig unter Einsatz eines Extrusionsschritts hergestellt, bei welchem ein entsprechendes Ausgangsmaterial in einem Extruder unter gewünschten Bedingungen von Druck und Temperatur mit mindestens einer Extruderwelle behandelt und gefördert wird.

Bei der Extrusion von Nahrungsmitteln und/oder der Extrusion von Futtermitteln für Tiere erfolgt häufig eine sogenannte Nasstexturierung, bei der sich faserartige Strukturen ausbilden. Das ist beispielsweise dann der Fall, wenn Produkte extrudiert werden, die tierische oder pflanzliche Proteine enthalten. Eine faserartige Struktur ist nicht immer einfach zu erreichen, da ein Extrudat am Ausgang des Extruders typischerweise expandiert, was einer dichten, kompakten, faserartigen Produktstruktur abträglich ist.

Zur Ausbildung einer faserartigen Struktur werden im Stand der Technik üblicherweise Kühldüsen verwendet, die am Ausgang des Extruders angeordnet sind und eine Expansion des Extrudats reduzieren oder, falls gewünscht, auch weitestgehend vollständig unterdrücken sollen.

Es sind unterschiedliche Ausgestaltungen von Kühldüsen bekannt.

Zum einen sind flach ausgebildete Kühldüsen bekannt, beispielsweise aus der US-4,910,040, WO 96/36242, WO 99/13735 und EP-1 059 040 A1. Vor allem bei hohem Durchsatz müssen solche flach ausgebildeten Kühldüsen aber recht breit ausgeführt werden, wesentlich breiter als die Austrittsöffnung(en) des Extruders. Das wirkt sich nachteilig auf die Homogenität der Fliessgeschwindigkeit in der Kühldüsen aus, was sich wiederum negativ auf das Erscheinungsbild und die Textur des Produkts auswirkt. Zudem sind solche Kühldüsen konstruktiv nachteilig, da die aus dem Produktdruck resultierende Kraft auf die ebene Wand der Kühldüse ein Biegemoment erzeugt, was einen massiveren Aufbau der Wand nötig macht.

Zum anderen sind zum Beispiel aus der DE 24 06 146 und US-3,925,566 Ausbildungen von Kühldüsen mit durchgehend ringförmigem Extrudatströmungskanal bekannt. Hierbei ist die Befestigung des Innenmantels problematisch, da dieser durch den durchgehenden ringförmigem Extrudatströmungskanal separiert ist. Die Befestigung wird beispielsweise durch Stege realisiert, die aber durch den ringförmigem Extrudatströmungskanal verlaufen müssen und den Produktfluss stören. Selbst wenn die Stege noch im Eingangsbereich der Kühldüse, beispielsweise im Verteiler, angeordnet sind, werden einmal getrennte Stränge von insbesondere proteinhaltigem Extrudat nicht wieder homogen verbunden, was das Erscheinungsbild und die Textur negativ beeinflusst. Auch Stege im Endbereich der Kühldüse sind nachteilig, da sie aus Festigkeitsgründen voluminös ausgeführt werden müssen, damit aber den Querschnitt des Produktkanals wesentlich verengen und das Erscheinungsbild und die Textur des Produkts ebenfalls negativ beeinflussen.

In der EP-3 524 059 A1 ist eine Kühldüse beschrieben, bei welcher ein Extrudatströmungskanal als Ringausschnitt ausgebildet ist und in Längsrichtung durch die Kühldüse verläuft. Der Extrudatströmungskanal ist in einem Abschnitt durch eine Stützstruktur unterbrochen, welche sich im Wesentlichen über die gesamte Länge der Kühldüse erstreckt und zur Befestigung der Innenwand des Extrudatströmungskanals (d.h. des Innenmantels) dient. Die Aussenwand des Extrudatströmungskanals ist aus mindestens zwei Segmenten ausgebildet, welche an der Stützstruktur (13) angelenkt und/oder verschwenkbar befestigt sind. Durch Verschwenken der Segmente wird der Extrudatströmungskanal geöffnet und kann auf einfache Weise gereinigt werden.

Allerdings ist die Kühldüse aus der EP-3 524 059 A1 für mit einem hohen Druck (beispielsweise 50 bar gegenüber den bisher eingesetzten 30-35 bar) arbeitende Extrusionen nicht optimal. Die Kühldüse hält den hierbei auftretenden höheren Belastungen nicht zuverlässig stand, was auf Kosten der Prozesssicherheit geht.

Es bestand daher Bedarf für eine Kühldüse, welche vergleichbare ausgezeichnete Kühleigenschaften und Reinigbarkeit aufweist, aber auch bei hohen Drücken eine sehr gute Prozesssicherheit aufweist.

Diese Aufgabe wird durch die vorliegende Erfindung gelöst.

Im Detail betrifft die vorliegende Erfindung eine Nahrungs- bzw. Futtermittelextruderkühldüse, mit
einem Extrudatströmungskanal mit einer Innenwand und einer Aussenwand, wobei sich der Extrudatströmungskanal von einem Einlassende der Kühldüse zu einem Auslassende der Kühldüse erstreckt und im Querschnitt (X-X) zur Hauptströmungsrichtung als Ringausschnitte ausgebildet ist;
mindestens einem Kühlmittelströmungskanal, mit dem der Extrudatströmungskanal in Wärmeübertragungsverbindung steht;
wobei die Aussenwand des Extrudatströmungskanals (6) mindestens aus einem ersten Segment und einem zweiten Segment ausgebildet ist, und
die Innenwand an einer ersten Position mit einer sich über die gesamte Länge des Kühlwerkzeugs erstreckenden ersten Stützstruktur verbunden ist,
dadurch gekennzeichnet, dass
die Innenwand an mindestens einer zweiten Position mit einer zweiten Stützstruktur verbunden ist, und
die Segmente der Aussenwand über mechanische Verbindungselemente mit den Stützstrukturen verbunden sind.

Ein erfindungsgemässe Kühldüse für einen Nahrungs- bzw. Futtermittelextruder weist ein Einlassende auf, das an einem Nahrungs- bzw. Futtermittelextruder (2) befestigbar ist und an dem Extrudat in das Kühlwerkzeug hineinführbar ist. Die Befestigung ist dabei vorzugsweise lösbar ausgestaltet, sodass die Kühldüse leicht ausgetauscht oder für Wartungs- bzw. Reinigungszwecke demontiert werden kann. Die Befestigung erfolgt vorzugsweise mit Schrauben (beispielsweise Sechskantschrauben), Klemmhebeln oder Spannverschlüssen, mit denen in an sich üblicher Art und Weise eine definierte Anpresskraft erzielbar ist.

Die Kühldüse weist ferner ein Auslassende auf, an dem gekühltes Extrudat abführbar ist. Im Bereich des Auslassendes kann eine Konfektionierung des gekühlten Extrudats erfolgen, wie nachfolgend noch erläutert wird.

Zwischen dem Einlassende und dem Auslassende des Kühlwerkzeugs erstreckt sich ein Extrudatströmungskanal. Der Extrudatströmungskanal ist dabei im Querschnitt (X-X) zur Hauptströmungsrichtung als Ringausschnitt ausgebildet. Im Rahmen der Erfindung kann der Ring des Ringausschnitts insbesondere kreisförmig, oval, polygonal, als spline-Kurve oder auch aus Kombinationen davon gebildet sein. Bevorzugt ist eine Ausbildung des Ringausschnitts als Kreisringausschnitt. Durch die Ausbildung als Ringausschnitt kann eine besonders gleichmässige Produktverteilung, gleichmässige Fliessgeschwindigkeit und gleichmässige Kühlung realisiert werden. Zudem hat sich herausgestellt, dass dünnwandigere Konstruktionen als im Stand der Technik möglich sind, da aus dem Produktdruck im Wesentlichen nur Zugkräfte, jedoch nur praktisch vernachlässigbare Biegekräfte entstehen.

Der Extrudatströmungskanal ist mit einer Innenwand und einer Aussenwand ausgebildet.

In bevorzugten Ausführungsformen des Kühlwerkzeugs ist die Innenwand des Extrudatströmungskanals im Wesentlichen zylindrisch, insbesondere hohlzylindrisch, ausgebildet. Derartige Ausbildungen sind fertigungstechnisch besonders einfach herstellbar.

Ganz besonders bevorzugt ist die Innenwand des Extrudatströmungskanals einstückig ausgebildet. Hierdurch sind eine einfache Fertigung und gute Reinigbarkeit gewährleistet, da wie nachstehend erläutert die äussere Oberfläche der Innenwand, welche gleichzeitig die Begrenzung des Extrudatströmungskanals darstellt, durch Wegklappen der Aussenwand freigelegt werden kann.

Die Aussenwand des Extrudatströmungskanals ist in einem Querschnitt zur Hauptströmungsrichtung mindestens aus einem ersten Segment und einem zweiten Segment ausgebildet. Besonders bevorzugt sind zwei Segmente, aber auch ein Aufbau aus drei, vier oder mehr Segmenten ist möglich.

Erfindungsgemäss bevorzugt sind die Segmente durch ein SandgussVerfahren hergestellt. Das Sandgussverfahren (auch als Sandformverfahren bezeichnet) ist ein bekanntes Giessverfahren, bei welchem ein Werkstoff wie Metall in eine Giessform aus Sand gegossen und die Sandform nach Erstarren des Werkstoffs entfernt wird.

Besonders bevorzugt ist eine Ausgestaltung, bei welcher die Aussenwand des Extrudatströmungskanals aus zwei Segmenten aufgebaut ist, welche mit den nachstehend beschriebenen, vorzugsweise zwei Stützstrukturen mechanisch verbunden sind. Diese zwei Segmente können wiederum in Untersegmente unterteilt sein, welche vorzugsweise über mechanische Verbindungselemente miteinander verbunden sind. Als mechanische Verbindungsmittel sind wiederum Schrauben (beispielsweise Sechskantschrauben), Klemmhebel oder Spannverschlüsse geeignet; besonders bevorzugt sind Schraubverbindungen.

Durch den Aufbau der Aussenwand aus demontierbaren, insbesondere wegklappbaren Segmenten ergibt sich eine besonders einfache und zuverlässige Reinigbarkeit des Extrudatströmungskanals und des gesamten Kühlwerkzeugs. Die innere Oberfläche der Aussenwand bildet die Begrenzung des Extrudatströmungskanals. Durch Entfernung der Aussenwand wird der Extrudatströmungskanal (und damit auch die äussere Oberfläche der Innenwand) freigelegt und eine Reinigung desselben möglich.

In einer bevorzugten Ausführungsform der vorliegenden Erfindung ist die Aussenwand des Extrudatströmungskanals im Betriebszustand (d.h. im Zustand der nicht demontierten Aussenwand) zylindrisch, insbesondere hohlzylindrisch, ausgebildet.

Die Segmente der Aussenwand können Griffe oder vergleichbare Elemente aufweisen, um die Segmente einfacher bewegen zu können.

Gemäss der vorliegenden Erfindung ist die Innenwand an einer ersten Position mit einer sich über die gesamte Länge des Kühlwerkzeugs erstreckenden ersten Stützstruktur verbunden. Diese erste Position ist vorzugsweise derart gewählt, dass sie sich im Betriebszustand der Kühldüse an der Unterseite der Kühldüse befindet. Die erste Stützstruktur kann somit vorzugsweise auf einer geeigneten Unterlage wie einem Wartungs- und Transportwagen angeordnet werden. Vorzugsweise ist die erste Stützstruktur auf einem Transportwagen verschraubt. Die Anordnung auf einem Transportwagen bleibt vorteilhafterweise auch während des Betriebs bestehen.

Die erste Stützstruktur unterbricht den Extrudatströmungskanal, da sie mit der Innenwand (welche eine innere Begrenzung des Extrudatströmungskanals darstellt) verbunden ist.

In einer bevorzugten Ausführungsform der vorliegenden Erfindung sind das erste Segment und das zweite Segment der Aussenwand des Extrudatströmungskanals an der ersten Stützstruktur angelenkt und/oder verschwenkbar befestigt, beispielsweise mittels Scharnieren. Durch eine solche Anlenkung bzw. Verschwenkbarkeit kann wie vorstehend beschrieben der Extrudatströmungskanal freigelegt und eine besonders einfache Reinigbarkeit des Extrudatströmungskanals bei minimalem Demontageaufwand realisiert werden.

Eine Abdichtung zwischen den Segmenten der Aussenwand und der ersten Stützstruktur ist vorzugsweise durch Presskontakt der Segmente mit der ersten Stützstruktur, rein metallisch dichtend realisiert. In alternativen Ausführungsformen kann die Dichtung durch eine insbesondere in eine Vertiefung eingelegte Elastomerdichtung bewirkt beziehungsweise unterstützt sein.

Gemäss einer bevorzugten Ausführungsform der vorliegenden Erfindung können in der ersten Stützstruktur Leitungen angeordnet sein, durch welche Kühlmittel in die nachstehend beschriebenen Kühlmittelströmungskanäle eingeleitet und abgeführt werden kann.

Gemäss der vorliegenden Erfindung ist die Innenwand weiterhin an mindestens einer zweiten Position mit einer zweiten Stützstruktur verbunden.

Vorzugsweise ist die Innenwand an zwei sich gegenüberliegenden Positionen mit den Stützstrukturen verbunden. Für den bevorzugten Fall, dass die Innenwand einstückig und zylindrisch, vorzugsweise hohlzylindrisch ausgebildet ist, sind die Stützstrukturen derart auf der Innenwand angeordnet, dass die Stützstrukturen einen Winkel von 180° einschliessen.

Die zweite Stützstruktur unterbricht ebenfalls den Extrudatströmungskanal, da sie mit der Innenwand (welche eine innere Begrenzung des Extrudatströmungskanals darstellt) verbunden ist.

Der ringförmige Extrudatströmungskanal ist somit an mindestens zwei Positionen durch eine jeweilige Stützstruktur unterbrochen. Dadurch ergibt sich, dass der Extrudatströmungskanal aus zwei Ringausschnitten, vorzugsweise Kreisringausschnitten gebildet ist, welche durch die Stützstrukturen voneinander getrennt sind.

In einer bevorzugten Ausführungsform, bei welcher die Innenwand einstückig und zylindrisch, vorzugsweise hohlzylindrisch ausgebildet ist und die Stützstrukturen derart auf der Innenwand angeordnet sind, dass die Zentren der Stützstrukturen (beispielsweise im Fall von spiegelsymmetrischen Stützstrukturen die Spiegelebenen durch die Stützstrukturen) einen Winkel von 180° einschliessen, liegt der Extrudatströmungskanal im Querschnitt zur Hauptströmungsrichtung im Wesentlichen in Form von zwei Ringausschnitten vor, insbesondere Kreisringausschnitten, wobei jeder Ausschnitt einen gleichen Winkel von etwas weniger als 180° (da ein Teil des verfügbaren Bereichs von den Stützstrukturen eingenommen wird) überstreicht.

Für den Fall, dass die Stützstrukturen in einem anderen Verhältnis zueinander angeordnet sind, ändern sich entsprechend die Winkel, welche von den jeweiligen Ringausschnitten überstrichen werden.

Es ist weiterhin denkbar, mehr als zwei der vorstehend beschriebenen Stützstrukturen an der Innenwand der Kühldüse bereitzustellen. In diesem Fall wird der Extrudatströmungskanal zusätzlich von den weiteren Stützstrukturen unterbrochen und in entsprechend mehr und kleinere Ringausschnitte unterteilt.

In einer bevorzugten Ausführungsform der vorliegenden Erfindung sind das erste Segment und das zweite Segment der Aussenwand des Extrudatströmungskanals an der zweiten (und gegebenenfalls jeder weiteren) Stützstruktur über mechanische Verbindungselemente lösbar befestigt. Als mechanische Verbindungsmittel sind wiederum Schrauben (beispielsweise Sechskantschrauben), Klemmhebel oder Spannverschlüsse geeignet; besonders bevorzugt sind Schraubverbindungen. Eine Abdichtung zwischen den Segmenten der Aussenwand und der zweiten Stützstruktur ist vorzugsweise durch Presskontakt der Segmente mit der zweiten Stützstruktur, rein metallisch dichtend realisiert. In alternativen Ausführungsformen kann die Dichtung durch eine insbesondere in eine Vertiefung eingelegte Elastomerdichtung bewirkt beziehungsweise unterstützt sein.

Durch die Bereitstellung einer zweiten Stützstruktur wird die Prozesssicherheit der Kühldüse auch bei hohen Drücken von beispielsweise 50 bar erhöht. Da die Kühldüse stabiler ausgestaltet ist. Die Innenwand ist mit der gesamten Stützstruktur über mehr Verbindungsstrukturen (wie Nähte, beispielsweise Schweissnähte, oder Punktverbindungen, beispielsweise Schraubverbindungen) stabilisiert als bei der Kühldüse gemäss der EP-3 524 059 A1. Diese Verbindungspunkte können eine kleinere Dimension aufweisen, da die Stabilisierung über mehr Punkte realisiert ist, und halten im Fall von Schweissverbindungen einem Wärmeverzug besser stand.

Weiterhin wird durch die Bereitstellung einer zweiten Stützstruktur auch ein homogenerer Fluss des Extrudats durch die Kühldüse erreicht. Während bei der Kühldüse gemäss der EP-3 524 059 A1 der sogenannte Parabeleffekt (schnellere Fliessgeschwindigkeit des Extrudats mit zunehmender Entfernung von der Stützstruktur, was zu einem parabelförmigen Strömungsprofil führt) ausgeprägt ist, wird dieser Effekt bei der erfindungsgemässen Kühldüse dadurch verringert, dass das Extrudate wegen der Anwesenheit von zwei Stützstrukturen keinen grossen Abstand von einer Stützstruktur hat und keine stark abweichenden Fliessgeschwindigkeiten aufweist.

Die Form der Stützstrukturen ist nur dahingehend eingeschränkt, dass die Stützstrukturen ihre Aufgabe erfüllen müssen, die Kühldüse während des Betriebs zuverlässig zu stützen und geschlossen zu halten. Beispielsweise können die Stützstrukturen Profilelemente sein und bevorzugte im Querschnitt ein Schienenprofil aufweisen. Die Form der Stützstrukturen kann voneinander verschieden sein.

Gemäss einer besonders bevorzugten Ausführungsform der vorliegenden Erfindung sind die Stützstrukturen mit mindestens einer durch die Innenwand verlaufende Strebe, vorzugsweise 1 bis 20 Streben, bevorzugter 2 bis 10 Streben, miteinander verbunden.

Durch diese Streben wird eine zusätzliche Stabilisierung erreicht, da eine noch festere Stützstruktur realisiert wird. Die mindestens eine Streben kann auf übliche Weise an oder in jeder der Stützstrukturen befestigt sein.

Die erfindungsgemässe Kühldüse weist mindestens einen Kühlmittelströmungskanal auf, mit dem der Extrudatströmungskanal in Wärmeübertragungsverbindung steht. Die Wärmeübertragung findet vorzugsweise als Wärmeübergang durch Konvektion statt.

Erfindungsgemäss bevorzugt sind zwei Kühlmittelströmungskanäle vorgesehen, wobei ein Kühlmittelströmungskanal, welcher mit dem Extrudatströmungskanal in Wärmeübertragungsverbindung steht, auf der Innenseite des Extrudatströmungskanals und ein weiterer Kühlmittelströmungskanal auf der Aussenseite des Extrudatströmungskanals vorhanden ist.

Auf der Innenseite des Extrudatströmungskanals ist der Kühlmittelströmungskanal vorzugsweise in der Innenwand und besonders bevorzugt spiralförmig ausgebildet. Auf der Aussenseite des Extrudatströmungskanals sind die Kühlmittelströmungskanäle vorzugsweise in den Segmenten der Aussenwand jeweils mäanderförmig in ausgebildet.

In einer bevorzugen Ausführungsform, die Stützstrukturen mit mindestens einer durch die Innenwand verlaufende Strebe miteinander verbunden sind, ist der Kühlmittelströmungskanal auf der Innenseite des Extrudatströmungskanals in der Innenwand spiralförmig die mindestens eine Strebe umlaufend ausgebildet.

Der beziehungsweise die Kühlmittelströmungskanäle sind vorzugsweise komplett geschlossen, vorzugsweise verschweisst, und auch bei der Demontage zu Austausch- oder Wartungszwecken nur über die Ein- und Ausgänge für das Kühlmittel zugänglich. Hierdurch können Produktkontaminierungen konstruktiv einfach vermieden werden. Die Ein- und Ausgänge können vorzugsweise als Stutzen ausgebildet sein und das Kühlmittel wird stromaufwärts, entgegen der Hauptströmungsrichtung des Produkts, geführt.

Besonders bevorzugt ist der mindestens eine Kühlmittelströmungskanal auf der Innenseite des Extrudatströmungskanals wie vorstehend beschrieben über die erste Stützstruktur mit Kühlmittel versorgbar. Hierdurch kann eine besonders zuverlässige Versorgung gewährleistet werden, die auch bei der Demontage (beispielsweise zu Reinigungszwecken des Extrudatströmungskanals) nicht geöffnet oder entfernt werden muss.

In einer bevorzugten Ausführungsform der erfindungsgemässen Kühldüse ist im Bereich des Einlassendes ein, insbesondere austauschbarer, Verteiler angeordnet. Der Verteiler ist derart ausgebildet, dass Extrudat vom (typischerweise nicht ringförmig oder als Ringausschnitt ausgebildeten) Austrittskanal eines Nahrungs- bzw. Futtermittelextruders über einen einzigen Verteilkanal dem als Ringausschnitt ausgebildeten Extrudatströmungskanal zuführbar ist.

Vorzugsweise weist der Verteilkanal über mindestens 50%, vorzugsweise mindestens 70%, besonders bevorzugt mindestens 90% der Länge (vom Austritt des Extruders bis zum Eintritt in den Extrudatströmungskanal) eine konstante Querschnittsfläche auf. So kann eine gleichmässige Fliessgeschwindigkeit erzielt werden.

Gemäss einer bevorzugten Ausführungsform der vorliegenden Erfindung sind im Verteilkanal vor den Stützstrukturen der Kühldüse Materialverteiler, vorzugsweise Keile, angeordnet. Auf diese Weise wird der Extrudatstrom gleichmässig auf die Ringausschnitte des Extrudatströmungskanals verteilt.

Im Unterschied zu bekannten Fingerverteilern, die typischerweise eine Länge von 10 cm und mehr (insbesondere 20 cm und mehr, häufig sogar 40 cm und mehr) aufweisen, werden mit einem derart ausgestalteten Verteiler keine unvorteilhaften Modifikationen im Produktbild und der Textur beobachtet, die im Stand der Technik wohl auf im Fingerverteiler getrennte und auf der Kühlstrecke nicht mehr wieder homogen verbundenen Extrudatsträngen basieren. Auch die Demontierbarkeit und Reinigbarkeit ist beim erfindungsgemäss bevorzugten Verteiler gegenüber Fingerverteilern signifikant verbessert.

Besonders bevorzugt ist der Verteiler austauschbar ausgebildet, beispielsweise aufschraubbar.

Durch Austausch des Verteilers können Produkteigenschaften gezielt beeinflusst werden. Es hat sich herausgestellt, dass insbesondere durch Engstellen, die eine innere Scherung des Produkts bewirken, wodurch ein Energieeintrag ins Produkt erfolgt, eine gewisse Faserigkeit im Produkt erzielbar ist.

Bevorzugterweise umfasst der Verteiler ein vorzugsweise als Kegel ausgebildetes Verteilelement. Die Ausbildung als Kreiskegel ist besonders vorteilhaft. Auch die Ausbildung als Kegelstumpf, insbesondere als Kreiskegelstumpf ist selbstverständlich möglich. Bei kegel- beziehungsweise kreiskegelförmiger Ausbildung kann der Verteiler auch mit kugelabschnittsförmiger Spitze realisiert sein, wodurch sich das Strömungsverhalten gezielt beeinflussen und an das Extrudat anpassen lässt. Der Rückstaudruck in den Extruder kann beeinflusst und das Ausmass der Scherung des Produkts beeinflusst werden. Das Verteilelement kann fest auf der Kühldüse aufgebracht sein (beispielsweisse durch Verschweissen). Gemäss einer anderen Ausführungsform ist das Verteilelement lösbar an der Kühldüse angeordnet; beispielsweise kann es in einer Vertiefung eingesteckt und in dieser Vertiefung durch den Druck des gegen das Verteilelement strömenden Produkts in Position gehalten werden; die Austauschbarkeit ist auf diese Art und Weise besonders einfach realisiert.

Die vorliegende Erfindung betrifft somit auch ein Verteilelement, umfassend einen kegelförmigen Vorderabschnitt und auf einem Rückabschnitt mindestens ein Mittel zur Befestigung des Verteilelements an einer Kühldüse, dadurch gekennzeichnet, dass im Verteilelement eine Kühlmittelzone vorhanden ist, welche mit Kühlmittel versorgt werden kann.

In bevorzugten Ausführungsformen ist der Verteiler mit einem oder mehreren Kühlkanälen zur Kühlung des Verteilkanals von aussen und/oder innen ausgebildet. Durch die Kühlung des Verteilkanals kann eine lokale Überhitzung in diesem Bereich verhindert werden. Es hat sich gezeigt, dass gerade in diesem Bereich des Verteilers das Extrudat einer höheren Erwärmung ausgesetzt sein kann als in anderen Bereichen. Dem kann mit einer gezielten Kühlung effektiv entgegengewirkt werden. Zur Ermittlung der Temperatur des Extrudats im Bereich des Verteilers kann ein Temperaturfühler vorgesehen sein, der vorzugsweise in die Wandung derart eingelassen ist, dass er den Fluss des Extrudats im Wesentlichen nicht behindert. Je nach gemessener Temperatur kann die Kühlung gesteuert und/oder geregelt werden, zum Beispiel durch die Anpassung der Kühlmitteltemperatur und/oder die Fliessgeschwindigkeit des Kühlmittels.

Es ist erfindungsgemäss bevorzugt, dass im Verteiler in axialer Richtung (d.h. in Extrudatströmungsrichtung) eine Temperierzone vorhanden ist. Besonders bevorzugt ist diese Temperierzone im Verteilelement ausgebildet. Wie vorstehend beschrieben weist das Verteilelement einen kegelförmigen Vorderabschnitt auf. In diesen Vorderabschnitt kann beispielsweise mit einem Kühlmitteleinlauf, vorzugsweise einem Kühlwassereinlauf, Kühlmittel eingebracht werden. Der Kühlmitteleinlauf kann beispielsweise mit einem der Kühlmittelströmungskanäle der Kühldüse verbunden sein und auf diese Weise mit Kühlmittel versorgt werden. Es ist aber auch möglich, mindestens einen Kühlmittelströmungskanal der Kühldüse und den Kühlmitteleinlauf des Verteilelements aus einer gemeinsame Zuleitung oder aus separaten Zuleitungen mit Kühlmittel zu versorgen.

Vorzugsweise ist der Kühlmitteleinlauf des Verteilelements zentral im Verteilelement angeordnet und endet mit einem Ausgang im kegelförmigen Vorderabschnitt. Das Kühlmittel gelangt somit vorzugsweise direkt in das kegelförmige Ende des Verteilelements. Vorzugsweise ist ein Endabschnitt des kegelförmigen Endes des Verteilelements mit dem verbleibenden Innenraum des Verteilelements nur über ein oder mehrere Elemente verbunden, welche eine rotierende Wassersäule erzeugen, wenn das Kühlmittel durch diese Elemente tritt. Als Beispiel für derartige Elemente seien röhrenförmige Leitungen, beispielsweise 2 bis 10 und vorzugsweise zwei bis 6 röhrenförmige Leitungen, Leitbleche oder ein Axialventilator genannt. Das Kühlmittel kann nur durch diese Elemente zurückfliessen und wird dabei verwirbelt. Das Verteilelement wirkt dabei wie ein statischer Mischer. Das Kühlmittel kann anschliessend durch mindestens einen Kühlmittelauslass, welcher vorzugsweise im hinteren Bereich des Verteilelements angeordnet ist, aus dem Verteilelement herausgeführt werden. Mit Ausnahme der Ein- und Auslässe für das Kühlmittel ist der innere Bereich des Verteilelements abgeschlossen.

In weiteren bevorzugten Ausführungsformen ist im Bereich des dem Extruder abgewandten und/oder des dem Extruder zugewandten Endes des Verteilers eine Blende anordenbar beziehungsweise angeordnet, mit welcher der Verteilkanal verengbar beziehungsweise verengt ist. Vorzugsweise kann eine derartige Blende als Lochblende oder als Blende mit Schlitzen, die als Kreissegmente ausgebildet sind, ausgebildet sein. Hierbei können die Kreis- bzw. Ringsegment als Segmente eines einzigen Kreises beziehngsweise Ringes oder als Segmente verschiedener Kreise bzw. Ringe ausgebildet sein.

Mit derartigen Blenden können wiederum gezielt Produkteigenschaften, insbesondere die Faserigkeit, beeinflusst werden; Langfaserigkeit und Kurzfaserigkeit kann erwirkt werden, aber auch amorphe bzw. homogene Strukturen. Die Dicke der Blenden in Hauptströmungsrichtung liegt im Bereich von 0.1 bis 1.0 cm, vorzugsweise von 0.15 bis 0.9 cm, besonders bevorzugt von 0.2 bis 0.8 cm. Die von Fingerverteilern bekannten Nachteile werden bei Blenden(verengungen) von so geringer Länge nicht beobachtet.

In einer weiteren bevorzugten Ausführungsform sind am Auslassende des Kühlwerkzeugs im Bereich des Extrudatströmungskanals Schneidstege angeordnet, sodass das gekühlte Extrudat unmittelbar beim Austritt in Stränge geteilt werden kann. Die Schneidstege können auf einer Schneidplatte angeordnet sein, die am Auslassende des Kühlwerkzeugs vor dem Extrudatströmungskanal montiert ist. Ferner kann den Schneidstegen nachgeordnet auch noch eine Schneidvorrichtung vorgesehen sein, welche die Stränge der Länge nach teilt. Das kann beispielsweise durch ein rotierendes Messer realisiert sein. Derartige Schneidapparate sind bekannt, beispielsweise aus der EP-3 539 748 A1.

Mit einer derartigen Kühldüse können Kapazitäten im Bereich von 125 bis 2`000 kg/h (insbesondere 175 bis 1`500 kg/h, weitere insbesondere 225 bis 1`000 kg/h) Extrudat bei nur geringer Baugrösse der Kühldüse mit einer typischen Länge von 0.5 bis 2.5 m (insbesondere 0.75 bis 2.25 m, weitere insbesondere 1 bis 2m) und einem Durchmesser von 100 bis 800 mm (insbesondere 200 bis 600 mm, weiter insbesondere 300 bis 400 mm) realisiert werden.

Die Kühldüse ist in den Bereichen, die mit dem Nahrungs- bzw. Futtermittel in Kontakt kommen, also insbesondere dem Extrudatströmungskanal, aus rostfreiem Edelstahl (bspw. Sortennummern 1.43xx oder 1.44xx gemäss EN 10088) ausgebildet. Diese Materialien zeichnen sich durch hochgradige Lebensmittelechtheit aus. Die Rauhigkeit bevorzugter Materialien liegt im Bereich von Ra 1.6 bis Ra 0.8 (gemäss DIN EN ISO 4287:1998).

Die vorliegende Erfindung betrifft weiterhin einen Nahrungs- beziehungsweise Futtermittelextruder, umfassend eine Kühldüse wie vorstehend beschrieben.

Erfindungsgemäss kann jeder herkömmliche Extruder mit der erfindungsgemässen Kühldüse versehen werden. Extruder sind in der Technik allgemein bekannt. Es wird beispielsweise auf die WO 2012/158023 A1 oder auf die Extruder, insbesondere Doppelschneckenextruder, von Bühler verwiesen. Solche Extruder haben vorzugsweise ein L/D-Verhältnis (Gesamtlänge zu Schneckendurchmesser) im Bereich von 20 bis 60, vorzugsweise 25 bis 50, besonders bevorzugt 25 bis 40. Erfindungsgemäß werden die Extruder vorzugsweise mit 100 bis 1000 U/min, besonders bevorzugt mit 300 bis 500 U/min und besonders bevorzugt mit 350 bis 400 U/min betrieben.

Zur Verbindung der erfindungsgemässen Kühldüse mit einem Extruder können herkömmliche geeignete Verbindungsmittel wie Schrauben eingesetzt werden, um die Kühldüse lösbar an einem Extruderausgang anzuordnen. Die erfindungsgemässe Kühldüse kann vorzugsweise an ihrem Einlassende einen Flansch mit Öffnungen für Schrauben aufweisen. Für den Fall, dass wir vorstehend beschrieben ein Verteiler am einlassende der Kühldüse angeordnet ist, weist der Verteiler eine entsprechende Verbindungsmöglichkeit auf.

Die Verbindung der erfindungsgemässen Kühldüse (oder eines daran angeordneten Verteilers) mit einem Extruder erfolgt derart, dass der Austrittskanal des Extruders in Flussverbindung mit dem Einlasskanal der Kühldüse steht. Das aus dem Extruder austretende Extrudat wird unmittelbar in die Kühldüse (oder den daran angeordneten Verteiler) eingeleitet.

Die vorliegende Erfindung betrifft weiterhin ein Verfahren zur Herstellung eines nasstexturierten Produkts, umfassend die Schritte
a) Nassextrusion eines Rohstoffs in einem Nahrungs- beziehungsweise Futtermittelextruder,
b) Hindurchleiten des nasstexturierten Extrudats durch eine am Auslass des Nahrungs- beziehungsweise Futtermittelextruders angeordnete Kühldüse wie vorstehend beschrieben.

Geeignete Ausgangsmaterialien und Extrusionsbedingungen sind beispielsweise in der WO 2021/032866 A1, WO 2023/156681, und der WO 2023/099413 beschrieben.

Vorzugsweise kann mit dem vorstehenden Verfahren ein Produkt hergestellt werden, das die Eigenschaften von Fleisch und Fisch und deren Rolle in der Ernährung imitiert.

Ein derartiges Produkt basiert vorzugsweise auf einem Rohstoff, welcher ein Protein umfasst, vorzugsweise ein pflanzliches Protein, Insektenprotein, Zellprotein, einschließlich Einzellprotein, wie von Hefe, Bakterien, Mikroalgen, Pilzen, fermentierten Produkten, die aus der Fermentation mit einem der oben genannten Organismen stammen, Schimmel und dergleichen, oder eine Mischung verschiedener Proteine.

Die vorliegende Erfindung wird nachfolgend anhand von nicht einschränkenden Ausführungsbeispielen und Figuren näher beschrieben. Es zeigen:
- Fig.1: eine schematische Darstellung eines Nahrungs- bzw. Futtermittelextruders mit einer daran angeordneten erfindungsgemässen Kühldüse;
- Fig.2: einen Querschnitt durch eine erfindungsgemässe Kühldüse entlang der Ebene X-X in Fig. 3;
- Fig.3: einen Längsschnitt durch eine erfindungsgemässe Kühldüse entlang der Ebene Y-Y in Fig. 2;
- Fig.4a: die erfindungsgemässe Kühldüse mit abgeklappten Segmenten der Aussenwand;

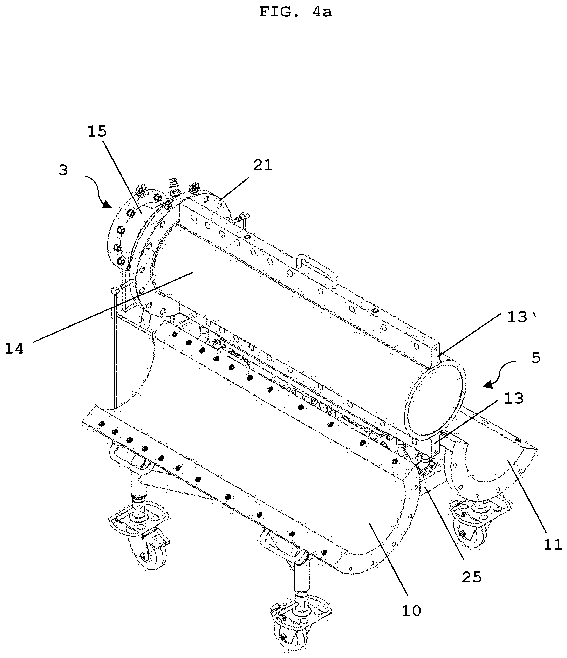

- Fig.4a: Die erfindungsgemässe Kühldüse mit zusammengeführten Segmenten der Aussenwand;

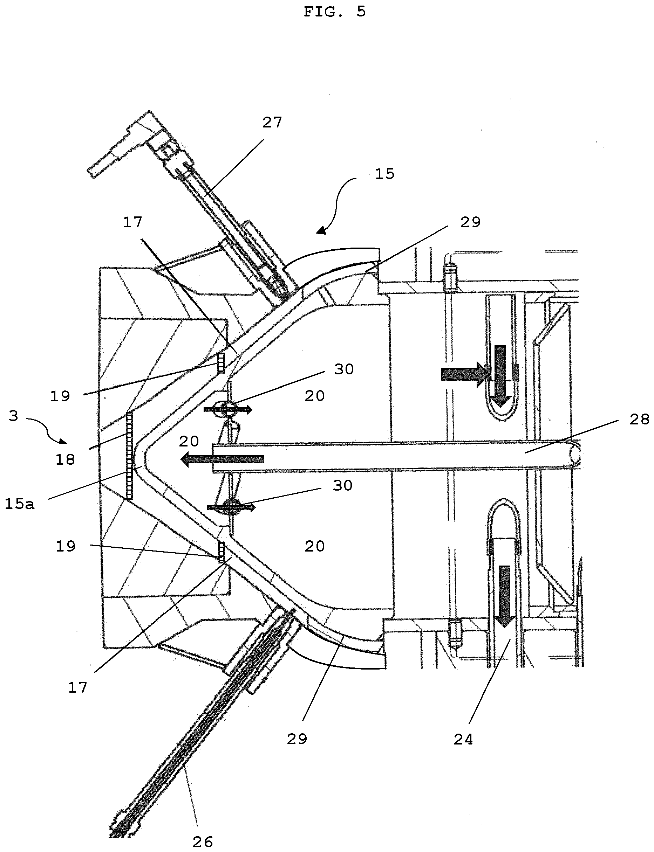

- Fig.5: eine schematische Darstellung einer Ausführungsform eines Einlassbereichs der erfindungsgemässen Kühldüse im Längsschnitt.

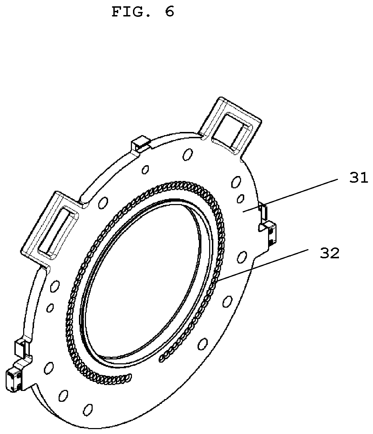

- Fig. 6: eine schematische Darstellung einer Ausführungsform einer Austrittsplatte für die erfindungsgemässe Kühldüse.

In den Figuren bezeichnen gleiche Bezugszeichen gleiche Elemente.

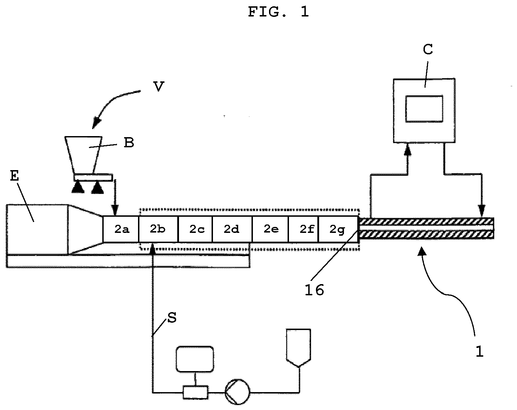

In Fig. 1 ist schematisch ein Extruder E gezeigt, der aus Segmenten (2a-2g) (auch als Barrels bezeichnet) aufgebaut ist. Ein Rohstoff V wird über die gravimetrische Dosierung B zugeführt. Über eine Zuführung S wird Wasser oder Dampf hinzugeführt. Die Kühldüse ist mit 1 gekennzeichnet. Aus einem Austrittskanal 16 eines Extruders gelangt Extrudat in die Kühldüse 1. Das Kühlmedium wird bevorzugt an der stromabwärtigen Seite der Kühldüse zugeführt und an der stromaufwärtigen Seite der Kühldüse abgeführt. Die Strömungsrichtung des Kühlmediums ist somit der Fliessrichtung des Extrudats durch die Kühldüse entgegengesetzt. Die Temperierung des Kühlmediums kann über eine Temperaturregelung justiert (gesteuert oder geregelt) werden; dies ist durch den Controller C illustriert. Besonders bevorzugt ist die Temperaturregelung derart ausgebildet, dass die Expansion des gekühlten Extrudats kontrolliert, vorzugsweise im Wesentlichen vollständig unterbunden werden kann. Für bestimmte Produkte kann es jedoch auch sinnvoll und ermöglicht sein, eine gewisse Expansion des gekühlten Extrudats zuzulassen. So kann das beispielsweise bei später zu marinierenden Produkten gewünscht sein, da die Marinade so besser anhaftet. Auch die sensorischen Eigenschaften können beeinflusst werden, sodass beispielsweise eine Textur wie bei «pulled pork» oder dergleichen resultiert. Auch dies kann durch die Temperaturregelung gesteuert oder geregelt ermöglicht sein.

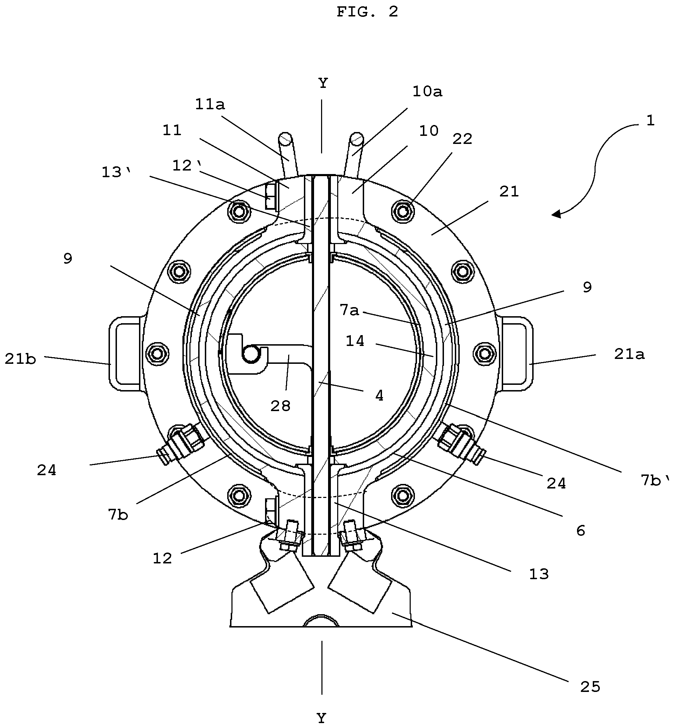

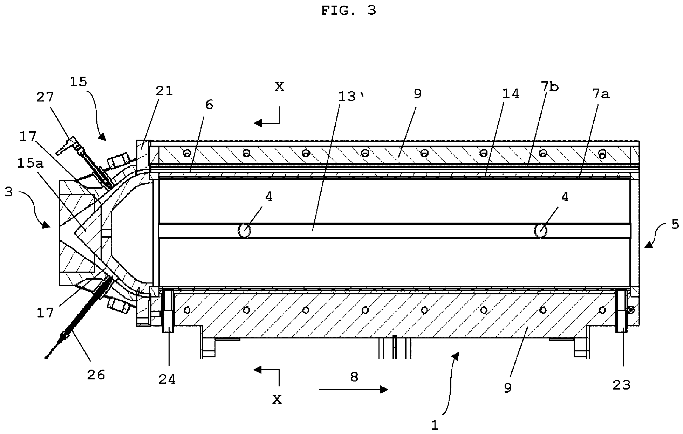

Fig. 2 zeigt den Querschnitt durch ein Kühlwerkzeug 1 entlang der Ebene X-X, die in Fig. 3 (mit Blickrichtung) eingezeichnet ist. Zu erkennen ist ein Flansch 21 im Bereich des Einlassendes des Kühlwerkzeugs. In diesem Flansch 21 befinden sich Durchführungen 22, in denen mechanische Verbindungselemente wie Schrauben angeordnet werden können, um einen (in den Figuren 3 und 5 detailliert gezeigten) Verteiler 15 oder einen Extruder E zu verbinden. Am Flansch 21 sind weiterhin Griffe 21a und 12b angeordnet. Der Flansch überdeckt die gesamte Fronseite der in Fig. 1 gezeigten Kühldüse 1. In Fig. 2 ist jedoch der mittlere Bereich des Flansches 21 weggelassen und der äussere Umfangsbereich des Flansches 21 an einigen Stellen nur schraffiert dargestellt, um dahinterliegende Komponenten zu zeigen.

Im unteren Bereich der Fig. 2 ist (hinter dem in diesem Bereich gestrichelt dargestellten äusseren Umfangsbereich des Flansches 21) eine erste Stützstruktur 13 gezeigt. An die erste Stützstruktur 13 grenzt von beiden Seiten ein ringausschnittförmiger Extrudatströmungskanal 6 an. An beiden Seiten der ersten Stützstruktur 13 sind mechanische Verbindungselemente 12 angeordnet (in Fig. 2 ist nur auf der linken Seite ein mechanisches Verbindungselement 12 zu erkennen). Die mechanischen Verbindungselemente 12 diesen zur lösbaren Befestigung eines ersten Segments 10 und eines zweiten Segments 11 der Aussenwand 9 des Extrudatströmungskanals 6.

Die erste Stützstruktur 13 ist auf einem Transportwagen 25 (vorzugsweise lösbar) angeordnet.

In der in Fig. 2 gezeigten Ausführungsform sind zudem das erste Segment 10 und das zweite Segment 11 der Aussenwand 9 an dem Transportwagen 25 angeordnet, wobei es sich hier um eine schwenkbare Verbindung handelt. Nach Lösen der mechanischen Verbindungselemente 12 können das erste Segment 10 und das zweite Segment 11 der Aussenwand 9 seitlich weggeklappt werden. Das Wegklappen des ersten Segments 10 und des zweiten Segments 11 der Aussenwand 9 wird bei der in Fig. 2 gezeigten Ausführungsform durch die Bereitstellung von Griffen 10a und 11a unterstützt, welche jeweils an dem ersten Segment 10 und dem zweiten Segment 11 der Aussenwand 9 angeordnet sind.

Im oberen Bereich der Fig. 2 ist (hinter dem in diesem Bereich gestrichelt dargestellten äusseren Umfangsbereich des Flansches 21) eine zweite Stützstruktur 13' gezeigt. An die zweite Stützstruktur 13' grenzt von beiden Seiten ebenfalls der ringausschnittförmige Extrudatströmungskanal 6 an. An beiden Seiten der zweiten Stützstruktur 13' sind mechanische Verbindungselemente 12' angeordnet (in Fig. 2 ist nur auf der linken Seite ein mechanisches Verbindungselement 12' zu erkennen). Die mechanischen Verbindungselemente 12' diesen zur lösbaren Befestigung des ersten Segments 10 und des zweiten Segments 11 der Aussenwand 9 des Extrudatströmungskanals 6.

Der ringausschnittförmige Extrudatströmungskanal 6 ist nur von der ersten Stützstruktur 13 und der zweiten Stützstruktur 13' unterbrochen.

Die Aussenwand 9 ist als Hohlwand ausgebildet; in ihr befinden sich Kühlmittelströmungskanäle 7b und 7b`, die in der Ausführungsform gemäss Fig. 2 mäanderförmig ausgebildet sind.

Der Extrudatströmungskanal 6 weist zudem eine Innenwand 14 auf. Die Innenwand 14 ist ebenfalls als Hohlwand ausgebildet; auch in ihr befindet sich ein Kühlmittelströmungskanal 7a, welcher in der Ausführungsform gemäss Fig. 2 spiralförmig ausgebildet ist. Der Kühlmittelströmungskanal 7a in der Innenwand 14 ist nicht unterbrochen.

Vorzugsweise können die Kühlmittelströmungskanäle 7a der Innenwand 14 und die Kühlmittelströmungskanäle 7b und 7b' der Aussenwand 9 unabhängig voneinander mit Kühlmittel vorsorgt und die Temperaturen der jeweiligen Kühlmittel unabhängig voneinander gesteuert und/oder geregelt werden. Beispielsweise können die Kühlmittelströmungskanäle 7b und 7b' der Aussenwand 9 durch Einlässe 23 (vgl. Figur 3) und der Kühlmittelströmungskanal 7a der Innenwand 14 durch die erste Stützstruktur 13 (nicht gezeigt) mit Kühlmittel versorgt werden. Sie können aber auch gemeinsam mit Kühlmittel versorgt werden, besonders bevorzugt über die erste Stützstruktur 13 (nicht gezeigt).

In Fig. 2 ist weiterhin ein Kühlmitteleinlass 28 zu erkennen, welcher beispielsweise über die Stützstruktur 13 mit Kühlmittel versorgt werden kann und das Kühlmittel in das in Fig. 5 gezeigte Verteilelement 15a leiten kann.

In der in Fig. 2 gezeigten Ausführungsform sind zudem die erste Stützstruktur 13 und die zweite Stützstruktur 13' durch eine zentrale Strebe 4 miteinander verbunden. Die Strebe 4 ist in der ersten Stützstruktur 13 und der zweiten Stützstruktur 13' vorzugsweise fest angeordnet und stabilisiert die Kühldüse 1 zusätzlich.

In Fig. 2 ist eine Strebe 2 gezeigt. Es können aber in Längsrichtung der Kühldüse 1 mehrere derartige Streben 4 hintereinander angeordnet sein.

Fig. 3 zeigt den Längsschnitt durch ein Kühlwerkzeug entlang der Ebene Y-Y, die in Fig. 2 eingezeichnet ist. Ersichtlich sind im unteren Bereich der Einlass 23 und der Auslass 24 für das Kühlmittel. Über den Einlass 23 wird sowohl der innere Kühlmittelströmungskanal 7a als auch die äusseren Kühlmittelströmungskanäle 7b und 7b' versorgt. Im linken Bereich der Figur, dem Einlassende 3 des Kühlwerkzeugs 1, ist der Verteiler 15 mit dem Verteilelement 15a angeordnet. Aus einem (nicht gezeigten) Austrittskanal 16 eines Extruders gelangt Extrudat in den Verteiler 15 und wird sodann in den Verteilerkanal 17 geleitet, der im Weiteren in den Extrudatströmungskanal 6 des Kühlwerkzeugs 1 übergeht. Die Hauptströmungsrichtung ist mit 8 bezeichnet; das Auslassende 5 des Kühlwerkzeugs ist entsprechend im rechten Bereich der Figur angeordnet. Im Verteiler 15 sind ferner ein Drucksensor 27 und ein Temperatursensor 26 angeordnet. Die ermittelten Werte von Druck beziehungsweise Temperatur können vorteilhaft für die Steuerung oder Regelung von Betriebsparametern (wie des Extruders E, und/oder der Kühlmitteltemperatur(en) der Kühldüse 1 und/oder des Verteilers 15) verwendet werden, aber auch für die Überwachung des Prozesses und/oder zur Gewährleistung der Reproduzierbarkeit.

In der Mitte ist die zweite Stützstruktur 13' mit (hier zwei) Streben 4 dargestellt.

Fig. 4a zeigt eine Kühldüse 1 mit abgeklappten Segmenten 10 und 11 der Aussenwand; der Einlassbereich 3 mit dem Verteiler 15 ist im hinteren Bildteil, der Auslassbereich 5 im vorderen Bildteil angeordnet. Die beiden Segmente 10 und 11 sind mit Scharnieren an der Stützstruktur 13 befestigt, sodass sie auf einer geeigneten Unterlage, wie einem Wartungs- und Transportwagen 25, einfach weggeklappt werden können, nachdem ihre Verbindung von der zweiten Stützstruktur 13' vorher gelöst wurde. Der gesamte Extrudatströmungskanal liegt sodann frei, und die Innenwand 14 ist für Reinigungszwecke in idealer Art und Weise zugänglich. Die erste Stützstruktur 13 ist auf dem Transportwagen 25 verschraubt. Die Anordnung auf dem Transportwagen 25 bleibt vorteilhafterweise auch während des Betriebs bestehen. Der Transportwagen 25 hat keinen grossen Platzbedarf und ermöglicht jederzeit unkomplizierte Anpassungen und Umbauten.

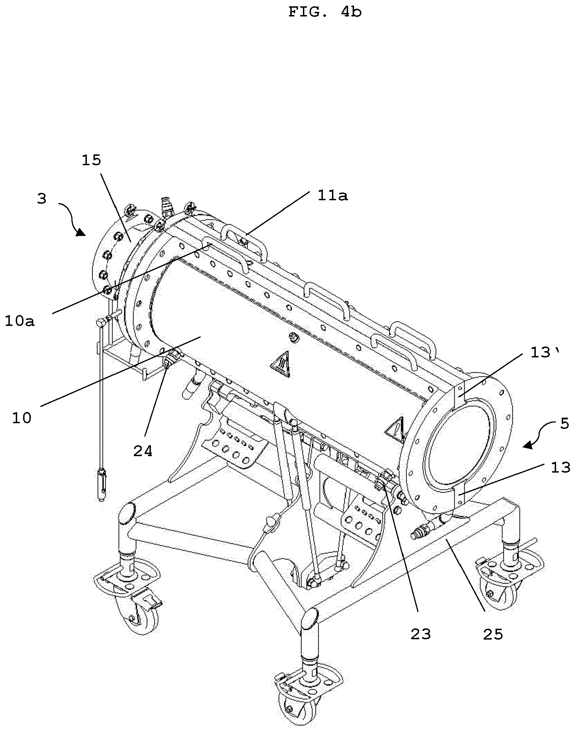

In Fig. 4b ist die Kühldüse 1 mit zusammengefügten Segmenten 10 und 11 gezeigt. Die Segmente 10 und 11 sind mit Gasdruckstossdämpfern gelagert, was eine einfache Wartung gewährleistet.

Fig. 5 zeigt den Verteiler 15 und das Einlassende 3 des Kühlwerkzeugs 1 im Längsschnitt entlang der Ebene Y-Y, die in Fig. 2 eingezeichnet ist, in einer Vergrösserung. Der Verteiler 15 ist im linken Bildteil angeordnet, mit einem Verteilelement 15a, dessen Spitze der Hauptströmungsrichtung entgegengerichtet ausgerichtet ist. Dieses Verteilelement 15a ist durch eine einfache Steckbefestigung gehalten. An der Spitze des Verteilelements 15a ist eine Blende 18 angeordnet, die als Schlitzblende ausgebildet ist. Im weiteren Verlauf des Verteilkanals 17 ist eine weitere Blende 19 angeordnet, die als Lochblende ausgebildet ist. Die Löcher bzw. Schlitze der Blenden 18 und 19 verengen den Verteilkanal 17 und dienen der Texturierung des Produkts. Der Verteiler 15 wird über eine Temperierzone 20 gekühlt, welche sich im Konus des Verteilelements 15a befindet. Die Kühlmittelzone 20 wird durch einen Kühlmitteleinlauf 28 mit Kühlmittel versorgt. Ein vorderer Bereich der Kühlmittelzone 20 ist von dem restlichen Innenraum des Verteilelements abgetrennt und nur über zwei röhrenförmige Leitungen 30 verbunden. Auf diese Weise wird das Kühlmittel in der Kühlmittelzone 20 verwirbelt. Das Kühlmittel kann die Kühlmittelzone 20 durch den Auslass 24 verlassen, welcher im hinteren Bereich des Verteilelements 15a angeordnet ist.

Im Verteiler 15 sind ein Drucksensor 27 und ein Temperatursensor 26 an beziehungsweise in den Verteilkanal 17 geführt. Im Verteilkanal 17 ist oben und unten jeweils ein Materialverteiler, vorzugsweise Keil, 29 und 29' erkennbar. Diese überführen den ringförmigen Verteilkanal 17 in einen als Ringausschnitten ausgebildeten Extrudatströmungskanal 6. Der Kühlmittelauslass 24 ist im unteren Bereich erkennbar.

In Fig. 6 ist eine schematische Darstellung einer Austrittsplatte 31 für die erfindungsgemässe Kühldüse 1 gezeigt. Die Austrittsplatte 31 kann am Auslassende der Kühldüse 1 angeordnet sein, beispielsweise über Schraubverbindungen. In der Austrittsplatte 31 befinden sich Öffnungen 32, durch welche das gekühlte extrudate die Kühldüse 1 verlässt. Diese Öffnungen 32 können als Schneidstege fungieren, sodass das gekühlte Extrudat unmittelbar beim Austritt in Stränge geformt und geteilt werden kann. Die Austrittsplatte 31 fungiert hierbei als Schneidplatte.

## Patentansprüche

1. Nahrungs- bzw. Futtermittelextruderkühldüse (1), mit
i) einem Extrudatströmungskanal (6) mit einer Innenwand (14) und einer Aussenwand (9), wobei sich der Extrudatströmungskanal (6) von einem Einlassende (3) der Kühldüse (1) zu einem Auslassende (5) der Kühldüse (1) erstreckt und im Querschnitt (X-X) zur Hauptströmungsrichtung (8) als Ringausschnitte (6', 6") ausgebildet ist;
ii) mindestens einem Kühlmittelströmungskanal (7), mit dem der Extrudatströmungskanal (6) in Wärmeübertragungsverbindung steht;
wobei die Aussenwand (9) des Extrudatströmungskanals (6) mindestens aus einem ersten Segment (10) und einem zweiten Segment (11) ausgebildet ist, und
die Innenwand (14) an einer ersten Position mit einer sich über die gesamte Länge des Kühlwerkzeugs (1) erstreckenden ersten Stützstruktur (13) verbunden ist,
**dadurch gekennzeichnet, dass**
die Innenwand (14) an mindestens einer zweiten Position mit einer zweiten Stützstruktur (13) verbunden ist, und
die Segmente (10, 11) der Aussenwand (9) über mechanische Verbindungselemente (12) mit den Stützstrukturen (13, 13') verbunden sind.

2. Kühldüse nach Anspruch 1, **dadurch gekennzeichnet, dass** die Innenwand (14) an zwei sich gegenüberliegenden Positionen mit den Stützstrukturen (13, 13') verbunden ist.

3. Kühldüse nach Anspruch 1 oder 2, **dadurch gekennzeichnet, dass** die Stützstrukturen (13, 13') mit mindestens einer durch die Innenwand (14) verlaufende Strebe, vorzugsweise 1 bis 20 Streben, bevorzugter 2 bis 10 Streben, miteinander verbunden sind.

4. Kühldüse nach einem der Ansprüche 1 bis 3, **dadurch gekennzeichnet, dass** die Innenwand (14) einstückig und zylindrisch, vorzugsweise hohlzylindrisch ausgebildet ist und mit den Stützstrukturen (13, 13') derart verbunden ist, dass Zentren der Stützstrukturen (13, 13') einen Winkel von 180° einschliessen.

5. Kühldüse nach einem der Ansprüche 1 bis 4, **dadurch gekennzeichnet, dass** der Extrudatströmungskanal (6) aus zwei Ringausschnitten (6', 6"), vorzugsweise Kreisringausschnitten gebildet ist, welche durch die Stützstrukturen (13, 13') voneinander getrennt sind.

6. Kühldüse nach einem der Ansprüche 1 bis 5, **dadurch gekennzeichnet, dass** die Segmente (10, 11) der Aussenwand (9) an der ersten Stützstruktur (13) angelenkt und/oder verschwenkbar befestigt sind, und an der zweiten Stützstruktur (13') über mechanische Verbindungselemente (12) lösbar befestigt sind.

7. Kühldüse nach einem der Ansprüche 1 bis 6, **dadurch gekennzeichnet, dass** im Bereich des Einlassendes (3) ein insbesondere austauschbarer Verteiler (15) angeordnet ist, welcher derart ausgebildet ist, dass Extrudat von einem Austrittskanal eines Nahrungs- bzw. Futtermittelextruders (E) über einen einzigen Verteilkanal (17) dem Extrudatströmungskanal (6) zuführbar ist.

8. Kühldüse nach Anspruch 7, **dadurch gekennzeichnet, dass** im Verteiler (15) in axialer Richtung eine Temperierzone ausgebildet ist.

9. Kühldüse nach Anspruch 7 oder 8, **dadurch gekennzeichnet, dass** im Verteilkanal (17) vor den Stützstrukturen (13, 13') Materialverteiler (29, 29'), vorzugsweise Keile, angeordnet sind.

10. Kühldüse nach einem der Ansprüche 7 bis 9, **dadurch gekennzeichnet, dass** im Bereich des Verteilers (15) mindestens eine Blende (18,19) angeordnet ist.

11. Kühldüse nach einem der Ansprüche 1 bis 10, **dadurch gekennzeichnet, dass** in der Innenwand (14) ein erster Kühlmittelströmungskanal (7a) und in der Aussenwand (9) ein zweiter Kühlmittelströmungskanal (7b) angeordnet sind, die mit dem Extrudatströmungskanal (6) in Wärmeübertragungsverbindung stehen.

12. Kühldüse nach Anspruch 11, **dadurch gekennzeichnet, dass** der erste Kühlmittelströmungskanal (7a) über eine der Stützstrukturen (13, 13') mit Kühlmittel versorgbar ist.

13. Verteilelement (15a), umfassend einen kegelförmigen Vorderabschnitt und auf einem Rückabschnitt mindestens ein Mittel zur Befestigung des Verteilelements an einer Kühldüse (1), **dadurch gekennzeichnet, dass** im Verteilelement (15a) eine Kühlmittelzone (20) vorhanden ist, welche mit Kühlmittel versorgt werden kann.

14. Nahrungs- beziehungsweise Futtermittelextruder, umfassend eine Kühldüse gemäss einem der Ansprüche 1 bis 12.

15. Verfahren zur Herstellung eines nasstexturierten Produkts, umfassend die Schritte
a) Nassextrusion eines Rohstoffs in einem Nahrungs- beziehungsweise Futtermittelextruder,
b) Hindurchleiten des nasstexturierten Extrudats durch eine am Auslass des Nahrungs- beziehungsweise Futtermittelextruders angeordnete Kühldüse gemäss einem der Ansprüche 1 bis 12.
